# EUROPÄISCHE PATENTSCHRIFT

(11) **EP 1 800 384 B1**
(45) Veröffentlichungstag und Bekanntmachung des Hinweises auf die Patenterteilung: **16.09.2020**
(21) Anmeldenummer: 05797165.7
(22) Anmeldetag: 29.09.2005
(51) Int. Cl.: H02K 1/18, H02K 5/24

(54) **ELEKTRISCHE MASCHINE, INSBESONDERE GENERATOR**
ELECTRIC MACHINE, ESPECIALLY GENERATOR
MACHINE ELECTRIQUE, NOTAMMENT GENERATEUR

(30) Priorität: 13.10.2004 CH 16902004
(43) Veröffentlichungstag der Anmeldung: 27.06.2007
(73) Patentinhaber: General Electric Technology GmbH, 5400 Baden (CH)
(72) Erfinder: GUERRA, Gianfranco, CH-5242 Birr (CH); HEDIGER, Daniel, CH-5504 Othmarsingen (CH)
(74) Vertreter: BRP Renaud & Partner mbB Rechtsanwälte Patentanwälte Steuerberater
(86) Internationale Anmeldenummer: PCT/EP2005/054915
(87) Internationale Veröffentlichungsnummer: WO 2006/040266

(56) Entgegenhaltungen:
- EP-A- 0 367 490
- EP-A- 1 083 647
- EP-A1- 0 166 114
- EP-A2- 0 633 643
- EP-A2- 1 083 647
- DE-A1- 19 960 224
- SU-A1- 1 008 849
- US-A- 2 885 580
- US-A- 4 134 036
- US-A- 6 091 177
- US-A1- 2002 074 894

## Beschreibung

### TECHNISCHES GEBIET

Die vorliegende Erfindung bezieht sich auf das Gebiet der rotierenden elektrischen Maschinen. Sie betrifft eine elektrische Maschine gemäss dem Oberbegriff des Anspruchs 1.

### STAND DER TECHNIK

Aus der EP-A1-0 166 114 und der EP-A2-0 633 643 sind horizontalachsige elektrische Maschinen bekannt, bei denen in einem horizontal teilbaren Gehäuse ein Einbaustator mittels mehrerer in axialer Richtung hintereinander angeordneter und voneinander beabstandeter Tragringe (Tragplatten) gelagert ist. Die Tragringe sind an ihrem Aussenumfang an gegenüberliegenden Stellen über Befestigungsteile mit dem Gehäuseunterteil verbunden und ansonsten von dem Gehäuse mit Abstand umgeben. Der Einbaustator weist an seinem äusseren Umfang verteilt in axialer Richtung verlaufende Pressbalken auf. Im Bereich der Pressbalken ist der Einbaustator mittels Befestigungskeilen in den Tragringen verspannt. Diese Art des Einbaus dient hauptsächlich dazu, die thermisch bedingten axialen und radialen Dehnungen des Statorblechkörpers möglichst gleichmässig auf das Gehäuse zu übertragen.

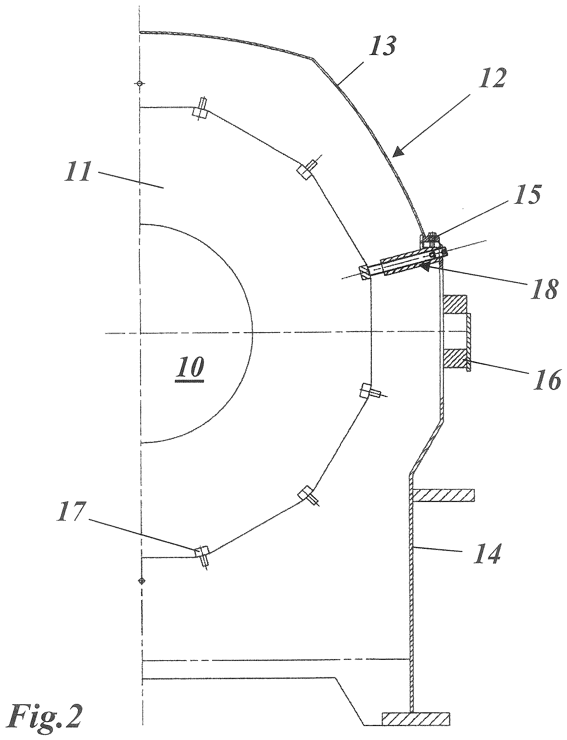

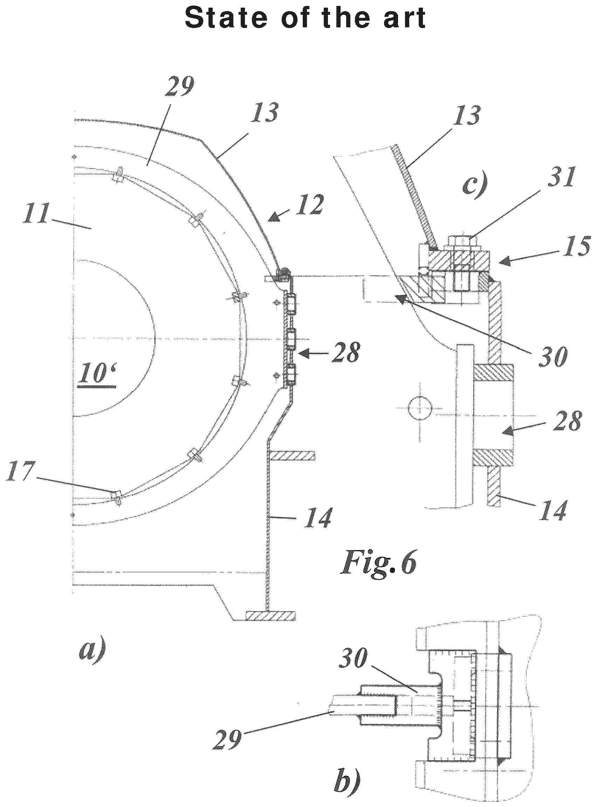

Die prinzipielle Konfiguration einer solchen bekannten Maschine ist aus der Fig. 6a ersichtlich. Die elektrische Maschine 10' hat einen näherungsweise zylindrischen Einbaustator 11, der die Maschinenachse und einen nicht dargestellten Rotor konzentrisch umgibt. Der Einbaustator 11 ist aussen von einem Gehäuse 12 umgeben, das sich aus einem Gehäuseoberteil 13 und einem Gehäuseunterteil 14 zusammensetzt. Gehäuseunterteil 14 und Gehäuseoberteil 13 sind in einer horizontalen Ebene mittels eines Trennflansches 15 lösbar miteinander verbunden. Der Einbaustator 11 ist an den Pressbalken 17 mittels Keilen in mehreren Tragringen 29 festgekeilt, von denen in Fig. 6a nur einer zu sehen ist. Die Tragringe 29 sind an zwei horizontal gegenüberliegen Stellen mit dem Gehäuseunterteil 14 über eine Befestigungsvorrichtung 28 verbunden und haben auf ihrem übrigen Umfang einen Abstand zum Gehäuse 12. Zwischen den Tragringen 29 liegt der Einbaustator 11 frei im Gehäuse, wie dies in Fig. 2 dargestellt ist.

Die beschriebene Art des Einbaus führt jedoch zu mehreren Problemen: Zum einen kann es zu unerwünschten Verformungen des Gehäuses 12 kommen, wenn die Maschine beim Transport mittels Seilen an Pollern (16 in Fig. 2) hochgehoben wird, die eigens für diesen Zweck an der Aussenseite des Gehäuses 12 angebracht sind. Zum anderen kann das Gehäuse während des Betriebes der Maschine in Schwingungen geraten, die nicht nur Lärm verursachen, sondern auch die gesamte Konstruktion mechanisch belasten.

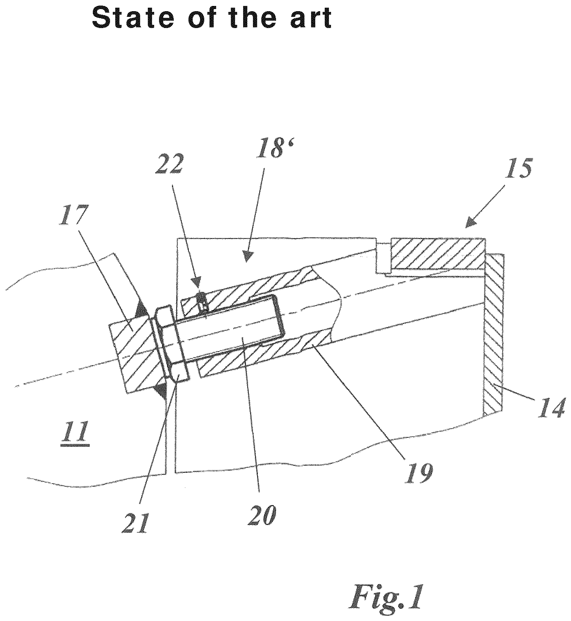

In der Vergangenheit sind für beide Probleme Lösungen realisiert worden, die in den Fig. 1 und 6 wiedergegeben sind. Zur Reduktion der Gehäuseverformung beim Anheben der Maschine waren gemäss Fig. 1 zwischen dem Gehäuse bzw. Gehäuseunterteil 14 und dem Einbaustator 11 Arretierungsvorrichtungen 18' vorgesehen. Die einzelne Arretierungsvorrichtung 18' besteht aus einer direkt unterhalb des Trennflansches 15 am Gehäuseunterteil 14 befestigten, radial nach innen gerichteten Gewindehülse 19, in die von innen eine Arretierungsschraube 20 eingeschraubt wird. Zum Arretieren wird bei abgenommenem Gehäuseoberteil die Arretierungsschraube 20 so weit aus der Gewindehülse 19 herausgedreht, dass sie mit der Oberseite des Schraubenkopfes 21 gegen den am Einbaustator 11 angebrachten Pressbalken 17 drückt. Ist die Endstellung der Arretierungsschraube 20 erreicht, wird sie in der Gewindehülse 19 mittels einer Feststellschraube 22 fixiert. Sind alle Arretierschrauben an den Einbaustator entsprechend angestellt, wird das Gehäuse geschlossen. Die Arretierung zwischen Gehäuse und Einbaustator 11 verhindert Gehäuseverformungen beim Anheben an den Pollern mit einem Drahtseil während dem Transport. In der Anlage bleibt jedoch die Arretierung am Einbaustator 11 während dem Betrieb angestellt. Dies beeinflusst das Vibrationsverhalten vom Gehäuse im Betrieb und kann zu unerwünschten hohen lokalen oder globalen Schwingungsamplituden führen.

Zur Reduktion von Gehäuseschwingungen während dem Betrieb wurden gemäss Fig. 6 Ankopplungsstücke 30 eingesetzt, die eine feste Ankopplung zwischen dem Gehäuse 12 und der Einbaustator-Aufhängung (Tragring 29) bewirken. Diese feste Ankopplung direkt über den zum Gehäuseunterteil 14 gehörenden Teil des Trennflansches 15 führt jedoch zumindest teilweise zu hohen lokalen oder globalen Schwingungsamplituden. Zudem kann die Ankopplung zum Gehäuseunterteil 14 ein ungleichmässiges Schwingungsverhalten gegenüber dem Gehäuseoberteil 13 zur Folge haben, das in extremen Fällen zu einem Schraubenbruch der Schraube 31 in der Trennebene zwischen Gehäuseunterteil 14 und Gehäuseoberteil 13 (Trennflansch 15) führen kann.

Die US 4 134 036 A beschreibt eine Einrichtung zum Befestigen eines Stators eines elektrischen Motors in einem Aussengehäuse. Die Befestigungsvorrichtung umfasst einen länglichen hohlen Metallzylinder mit drei Längsplatten, die um 120° an der Aussenwand befestigt sind. Die Zylinder/ Stator Anordnung wird im Aussengehäuse mit einer Vielzahl von Bolzen gehalten, welche sich durch das Aussengehäuse erstrecken und in Öffnungen mit Windungen in die längsseitig befestigten Platten eingreifen, die an der äusseren Zylinderfläche gesichert sind.

Die SU 1 008 849 A1 beschreibt eine elatische Befestigung eines Statorkerns in einem Motorgehäuse mittels externer elastischer Elemente, die in Form von Paketen aus Federscheiben hergestellt sind.

Die US 2 885 580 A beschreibt einen Stator eines elektrischen Generators mit einer Vielzahl von winkelmässig beabstandeten inneren peripher angeordneten Befestigungsaugen. Der Statorkern weist eine Vielzahl von winkelmässig beabstandeten Streifen auf, welche an der Aussenseite des Statorkerns befewstigt sind, sowie Einrichtungen zum Platzieren und Sichern des Statorkerns im Gehäuse. Eine Vielzahl von einstellbaren Keilen greifen an die äusseren Enden des Gehäuses und sind an den Befestigungsaugen angeordnet.

Die EP 1 083 647 A2 beschreibt eine elektrische Maschine mit Sicherungsmitteln, Tragringen und einem Gehäuseunterteil welche eine freie Ausdehnung des wärmeren Statorblechkörpers gegenüber dem kälteren Gehäuse gewährleisten. Die Sicherungsmittel sind in der Länge einstellbare Abstandhalter die jeweils eine Gewindehülse und eine darin eingedrehte Schraube umfassen.

### DARSTELLUNG DER ERFINDUNG

Es ist Aufgabe der Erfindung, eine elektrische Maschine der bekannten Art hinsichtlich der Wechselwirkung zwischen Einbaustator und Gehäuse derart zu modifizieren, dass die während des Betriebes auftretenden Gehäuseschwingungen massiv reduziert werden, ohne die für den Transport notwendige Stabilität aufgeben zu müssen.

Die Aufgabe wird durch die Gesamtheit der Merkmale des Anspruchs 1 gelöst. Der Kern der Erfindung besteht darin, zusätzliche Vorrichtungen zur Fixierung des Gehäuses relativ zum Einbaustator bzw. zu der Einbaustator-Aufhängung oder den Tragringen vorzusehen, welche als von ausserhalb des Gehäuses verstellbare Vorrichtungen ausgebildet sind. Hierdurch ist es möglich, die Kopplung zwischen Gehäuse und Einbaustator ohne Schwierigkeiten von aussen jederzeit zu verändern bzw. einzustellen, um die Gehäuseschwingungen zu minimieren. Insbesondere kann eine solche Veränderung zwischen dem Transport der Maschine und dem Betrieb vorgenommen werden, so dass gleichzeitig die Stabilität des Gehäuses beim Transport und die reduzierte Kopplung beim Betrieb verwirklicht werden kann. Die Erfindung ist dadurch gekennzeichnet, dass die Fixierungsvorrichtungen als von ausserhalb des Gehäuses lösbare Arretierungsvorrichtungen zur Arretierung zwischen Gehäuse und Einbaustator ausgebildet sind, dass die Arretierungsvorrichtungen jeweils eine Arretierungsschraube umfassen, welche im Gehäuse von aussen einschraubbar gelagert ist, und welche mit dem inneren Ende an den Einbaustator anstellbar ist, dass der Einbaustator an seinem äusseren Umfang verteilt eine Mehrzahl von in axialer Richtung verlaufende Pressbalken aufweist, und dass die Arretierungsschrauben mit dem inneren Ende an die Pressbalken anstellbar sind. Für den Transport werden die Arretierungsschrauben an den Einbaustator angestellt, um eine Verformung des Gehäuses durch die beim Transport auftretenden Kräfte zu vermeiden. Ist die Maschine an ihrem Standort aufgestellt, werden die Arretierungsschrauben von aussen gelöst, um das Gehäuse schwingungsmässig vom Einbaustator zu entkoppeln. Die Arretierungsschrauben sind jeweils in einer radial ausgerichteten Gewindehülse einschraubbar gelagert, welche Gewindehülse am Gehäuse befestigt, insbesondere beispielhaft angeschweisst, ist, und es sind Mittel zum Kontern der Arretierungsschraube in der Gewindehülse vorgesehen. Dabei sind die Längen der Gewindehülsen und der Arretierungsschrauben so gewählt, dass nach dem Herausschrauben der Arretierungsschrauben ein ausreichendes Spiel zwischen den Gewindehülsen und dem Einbaustator verbleibt, und dass nach dem Anstellen der Arretierungsschrauben an den Einbaustator jeweils eine Konterschraube von aussen in die Gewindehülse einschraubbar ist. In einem Beispiel weisen die Arretierungsschrauben und/oder die Konterschrauben zur Betätigung an ihrem äusseren Ende vorzugsweise jeweils einen Innensechskant auf.

Wenn am Gehäuse Vorrichtungen zum Anheben der Maschine angeordnet sind, ist es beispielhaft zweckmässig, dass die Arretierungsvorrichtungen über das Gehäuse derart verteilt angeordnet sind, dass beim Anheben der Maschine an den Anhebevorrichtungen Verformungen des Gehäuses durch die Arretierungsvorrichtungen verhindert werden. Wenn das Gehäuse aus einem Gehäuseoberteil und einem Gehäuseunterteil zusammengesetzt ist, welche Teile an einem Trennflansch miteinander lösbar verbunden sind, sind die Arretiervorrichtungen beispielhaft vorzugsweise in unmittelbarer Nähe des Trennflansches am Gehäuse befestigt.

Weiterhin sind Fixierungsvorrichtungen als von ausserhalb des Gehäuses einstellbare Abstimmvorrichtungen zur einstellbaren Ankopplung des Gehäuses an die Einbaustator-Aufhängung bzw. Tragringe ausgebildet, wobei die Abstimmvorrichtungen jeweils eine Abstimmschraube umfassen, welche im Gehäuse von aussen einschraubbar gelagert ist, und welche beispielhaft mit dem inneren Ende an die Einbaustator-Aufhängung bzw. die äussere Kante des Tragrings anstellbar ist. Insbesondere sind die Abstimmschrauben jeweils in einer im wesentlichen radial ausgerichteten Gewindehülse einschraubbar gelagert, welche Gewindehülse am Gehäuse befestigt, beispielhaft insbesondere angeschweisst, ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt einen Schnitt durch eine nicht veränderbare Arretierungsvorrichtung, wie sie in der Vergangenheit eingesetzt worden ist;
- Fig. 2: den Querschnitt durch eine elektrische Maschine mit einer Arretierungsvorrichtung gemäss einem bevorzugten Ausführungsbeispiel im arretierten Zustand;
- Fig. 3: in einem stark vergrösserten Ausschnitt die Arretierungsvorrichtung aus Fig. 2 im arretierten Zustand;
- Fig. 4: in einer zu Fig. 3 vergleichbaren Darstellung die entarretierte (gelöste) Arretierungsvorrichtung aus Fig. 2;
- Fig. 5: die Maschine aus Fig. 2 im entarretierten Zustand;
- Fig. 6: in mehreren Teilfiguren Fig. 6a-c unterschiedliche Ansichten einer elektrischen Maschine mit einer in der Vergangenheit benutzten festen Kopplung zwischen dem Gehäuse und der Einbaustator-Aufhängung (dem Tragring); und
- Fig. 7: in einer zu Fig. 6 vergleichbaren Darstellung mit zwei Teilfiguren 7a und 7b eine elektrische Maschine mit einer einstellbaren Kopplung gemäss einem anderen bevorzugten Ausführungsbeispiel der Erfindung.

### WEGE ZUR AUSFÜHRUNG DER ERFINDUNG

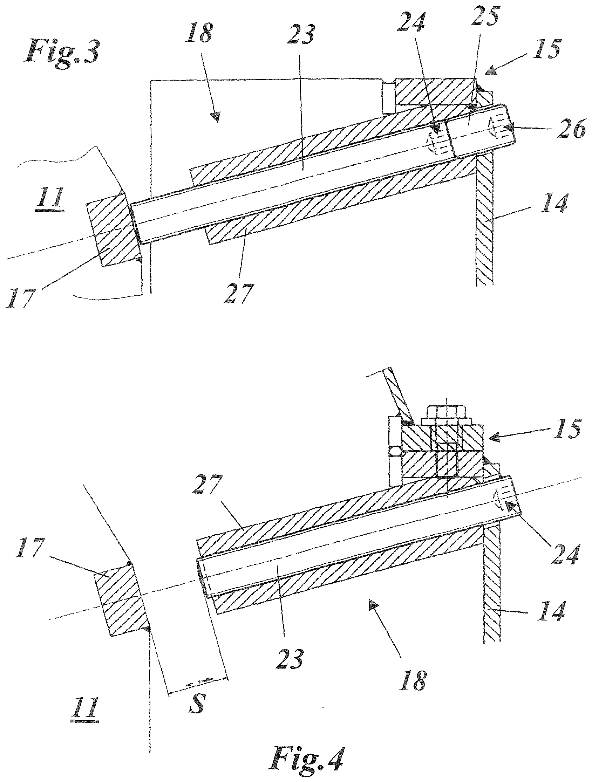

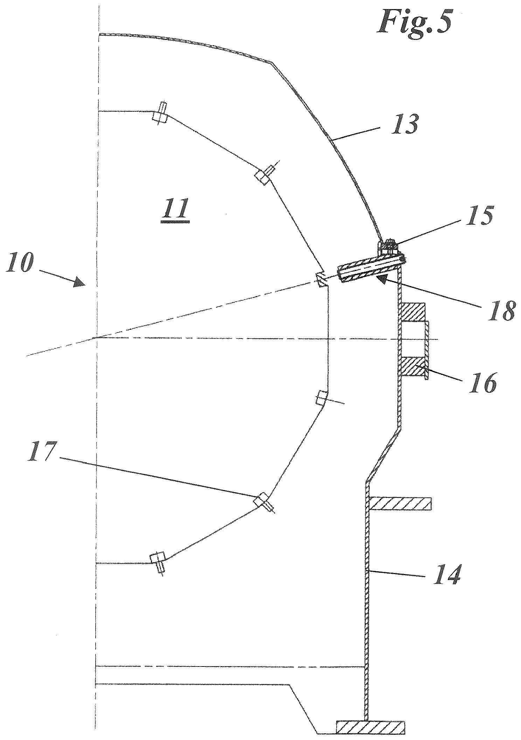

In Fig. 2-5 ist in unterschiedlich vergrösserten Ausschnitten ein erstes bevorzugtes Ausführungsbeispiel der Erfindung in Form einer Arretierungsvorrichtung 18 wiedergegeben, wobei die Fig. 2 und 3 die Arretierungsvorrichtung 18 im arretierten Zustand zeigen, während die Fig. 4 und 5 die Arretierungsvorrichtung im gelösten Zustand darstellen. Wie bereits eingangs beschrieben, hat die in den Fig. 2-5 dargestellte horizontalachsige, elektrische Maschine 10, die insbesondere als Generator ausgebildet ist, einen Einbaustator 11 mit am äusseren Umfang angeordneten Pressbalken 17. Der Einbaustator 11 ist in einem Gehäuse 12 untergebracht und befestigt, das aus einem Gehäuseunterteil 14 und einem Gehäuseoberteil 13 zusammengesetzt ist, die in einer horizontalen Trennebene mittels eines Trennflansches 15 lösbar verbunden sind. Der Einbaustator 11 ist über mehrere, in Fig. 2-5 nicht dargestellte Tragringe mit dem Gehäuse 12 verbunden. Zwischen den Tragringen ist er dagegen vom Gehäuse 12 mit Abstand umgeben. An den vertikalen Seitenwänden des Gehäuseunterteils 14 sind aussen seitlich abstehende Poller 16 angeschweisst, um die jeweils ein Seil zum Anheben der Maschine 10 beim Transport gelegt werden kann. Um die beim Anheben der Maschine auf das Gehäuse 12 einwirkenden Verformungskräfte aufzufangen, sind - wie bei der in Fig. 1 dargestellten früheren Lösung - direkt oberhalb der durch die Poller 16 gehenden horizontalen Ebene und unmittelbar unterhalb des Trennflansches 15 Arretierungsvorrichtungen 18 vorgesehen, mittels derer sich das Gehäuse 12 am Einbaustator 11 abstützen kann.

Der konstruktive Aufbau der Arretierungsvorrichtungen 18 ist aus der vergrösserten Darstellung in Fig. 3 und 4 erkennbar. Unterhalb des Trennflansches 15 ist in das Gehäuseunterteil 14 eine von aussen zugängliche Gewindehülse, eine erste Gewindehülse 27, eingeschweisst, die sich nach innen zu in radialer Richtung bezüglich der (senkrecht zur Zeichenebene stehenden) Maschinenachse erstreckt. In die erste Gewindehülse 27 ist eine Arretierungsschraube 23 in Form einer Gewindestange eingeschraubt. Die Arretierungsschraube 23 kann mit dem inneren Ende zur Arretierung an den Pressbalken 17 am Einbaustator 11 angestellt werden (Fig. 3).

Die Längen der ersten Gewindehülse 27 und der Arretierungsschraube 23 sind so gewählt, dass nach dem Lösen bzw. Herausschrauben der Arretierungsschraube 23 (Fig. 4) ein ausreichendes Spiel S zwischen der ersten Gewindehülse 27 und dem Einbaustator 11 verbleibt, und dass nach dem Anstellen der Arretierungsschraube 23 an den Einbaustator 11 (Fig. 3) von aussen jeweils zusätzlich eine Konterschraube 25 zum Kontern der Arretierungsschraube 23 in die erste Gewindehülse 27 einschraubbar ist. Sowohl die Arretierungsschraube 23 als auch die Konterschraube 25 haben an ihren äusseren Enden einen Innensechskant 24 bzw. 26, mittels dessen sie von aussen betätigt werden können.

Die mit der Arretierungsvorrichtung 18 mögliche Arretierung zwischen Gehäuse 12 und Einbaustator 11 verhindert die Gehäuseverformung beim Anheben der Maschine an den Pollern 16 mit einem Drahtseil während des Transportes. Damit das Gehäuseoberteil 13 bzw. der Gehäusedeckel inkl. aller Anbauten in der Anlage nicht aufwändig demontiert werden muss, um die Arretierung zurückzustellen, kann diese nun von aussen zurückgestellt werden.

Die Bedienung der Arretierungsvorrichtung 18 läuft wie folgt ab: Zum Transport der Maschine 10 wird die Arretierungsschraube 23 durch das Gehäuse 12 hindurch an den Einbaustator 11 von aussen angestellt und anschliessend mit der Konterschraube 25 gesichert (Fig. 3). Während aller Transporte bleibt die Arretierung angestellt. In der Anlage wird dann die Konterschraube 25 vor der Inbetriebnahme der Maschine 10 entfernt, die Arretierungsschraube 23 zurückgestellt und mit einem Schweisspunkt oder Körnerschlag oder dgl. gesichert (Fig. 4). Das Spiel S stellt dabei sicher, dass keine Vibrationen vom Einbaustator 11 auf das Gehäuse 12 mehr übertragen werden können. Es versteht sich dabei von selbst, dass in axialer Richtung mehrere Arretierungs-Ebenen über die Generatorlänge betrachtet nötig sind.

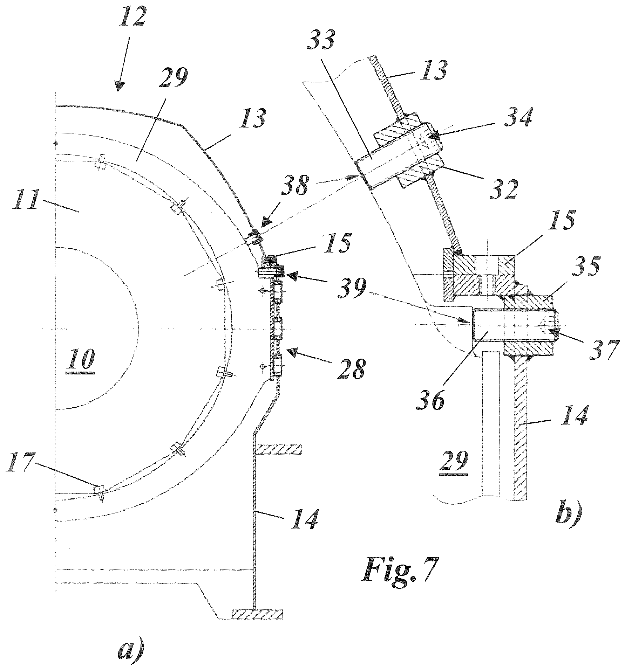

Obgleich die Arretierung zwischen Gehäuse 12 und Einbaustator 11 für den Betrieb der Maschine gelöst wird, um Schwingungen des Gehäuses 12 zu vermeiden, reduziert eine gezielte, einstellbare Ankopplung zwischen Gehäuse 12 und Einbaustator-Aufhängung, d.h. im vorliegenden Fall, den Tragringen 29, Gehäusevibrationen während des Betriebes. Dazu werden gemäss Fig. 7 am Gehäuse 12 in der Nähe des Trennflansches 15 von aussen einstellbare Abstimmschrauben 33 und/oder 36 vorgesehen. Die Abstimmschrauben 33, 36 sind in Gewindehülsen, zweite Gewindehülsen 32 bzw. 35, von aussen einschraubbar gelagert. Die Abstimmschrauben 33, 36 können als Tuning-Schrauben an die Aussenkanten der Einbaustator-Aufhängung bzw. der Tragringe 29 angestellt werden und eine einstellbare Vorspannung erzeugen. Die zweiten Gewindehülsen 32, 35 sind am Gehäuseoberteil 13 bzw. am Gehäuseunterteil 14 festgeschweisst. Die Betätigung der Abstimmschrauben 33, 36 von aussen erfolgt jeweils mittels eines Innensechskants 34 bzw. 37.

Die Abstimmung (das Tuning) des Schwingverhaltens verläuft wie folgt: Die Abstimmschrauben 33 bzw. 36 werden durch das Gehäuse 12 hindurch gegen die Einbaustator-Aufhängung (Tragringe 29) von aussen angestellt. Bei Inbetriebnahme der Maschine werden dann durch entsprechendes Verspannen oder komplettes Lösen der Abstimmschrauben 33 bzw. 36 die Gehäuseschwingungsamplituden minimiert. Die Abstimmschrauben können dann mit einem Schweisspunkt oder einem Körnerschlag oder dgl. in der eingestellten Position gesichert werden.

Darüber hinaus kann ein synchrones Schwingungsverhalten von Gehäuseoberteil 13 und Gehäuseunterteil 14 auch sichergestellt werden, indem eine entsprechende formschlüssige Verbindung (z.B. mittels Passbolzen) im Trennflansch 15 eingesetzt wird. Dies hat zur Folge, dass pro Abstimmebene nur eine Abstimmschraube 33 oder 36 im Gehäuseoberteil 13 oder im Gehäuseunterteil 14 eingesetzt werden muss.

Es versteht sich wiederum von selbst, dass in axialer Richtung mehrere Abstimm (Tuning)-Ebenen über die Generatorlänge betrachtet nötig sind, um das Schwingungsverhalten zu optimieren.

### BEZUGSZEICHENLISTE

- 10,10': elektrische Maschine (Generator)
- 11: Einbaustator
- 12: Gehäuse
- 13: Gehäuseoberteil
- 14: Gehäuseunterteil
- 15: Trennflansch
- 16: Poller
- 17: Pressbalken
- 18,18': Arretierungsvorrichtung
- 19: Gewindehülse
- 20,23: Arretierungsschraube
- 21: Schraubenkopf
- 22: Feststellschraube
- 24,26: Innensechskant
- 25: Konterschraube
- 27: erste Gewindehülse
- 28: Befestigungsvorrichtung
- 29: Tragring
- 30: Ankopplungsstück
- 31: Schraube
- 32,35: zweite Gewindehülse
- 33,36: Abstimmschraube
- 34,37: Innensechskant
- 38,39: Abstimmvorrichtung
- S: Spiel

## Patentansprüche

1. Elektrische Maschine (10), umfassend einen Einbaustator (11) und ein Gehäuse (12, 13, 14), welches Gehäuse (12, 13, 14) den Einbaustator (11) mit Abstand umgibt, wobei der Einbaustator (11) mittels einer Einbaustator-Aufhängung (29) in dem Gehäuse (12, 13, 14) gelagert ist, wobei die Einbaustator-Aufhängung (29) insbesondere in Form mehrerer Tragringe ausgeführt ist, welche Tragringe den Einbaustator (11) umschliessen und in axialer Richtung voneinander beabstandet hintereinander angeordnet sind,
wobei die elektrische Maschine (10) Fixierungsvorrichtungen zur Fixierung des Gehäuses (12, 13, 14) relativ zum Einbaustator (11) bzw. zur Einbaustator-Aufhängung (29) umfasst, welche Fixierungsvorrichtungen als Abstimmvorrichtungen (38, 39) und Arretierungsvorrichtungen (18) ausgebildet sind, wobei die Abstimmvorrichtungen (38, 39) von ausserhalb des Gehäuses (12, 13, 14) zur einstellbaren Ankopplung des Gehäuses (12, 13, 14) an die Einbaustator-Aufhängung (29) ausgebildet sind, und die Arretierungsvorrichtungen (18) zur Arretierung zwischen dem Gehäuse (12, 13, 14) und dem Einbaustator (11) ausgebildet sind, und
wobei die Abstimmvorrichtungen (38, 39) jeweils eine Abstimmschraube (33, 36) umfassen, welche Abstimmschrauben (33, 36) bei Inbetriebnahme der elektrischen Maschine (10) von aussen in das Gehäuse (12, 13, 14) eingeschraubt sind und mit ihrem inneren Ende an die Einbaustator-Aufhängung (29) anstellbar sind,
wobei weiterhin die Arretierungsvorrichtungen (18) während des Transports der elektrischen Maschine (10) angeordnet sind und jeweils eine Arretierungsschraube (23) umfassen, welche Arretierungsschrauben (23) in das Gehäuse von aussen durch erste Gewindehülsen (27) im Gehäuse eingeschraubt sind, welche sich nach innen zu in radialer Richtung bezüglich der Maschinenachse erstrecken, wobei der Einbaustator (11) an seinem äusseren Umfang verteilt eine Mehrzahl von in axialer Richtung verlaufende Pressbalken (17) aufweist, und dass die Arretierungsschrauben (23) mit dem inneren Ende an die Pressbalken (17) anstellbar sind, wobei die Arretierungsvorrichtungen (18) zur Arretierung zwischen dem Gehäuse (12, 13, 14) und dem Einbaustator (11) ausgebildet sind indem die Arretierungsschrauben (23) konfiguriert und angeordnet sind um beim Transport der elektrischen Maschine (10) mit dem inneren Ende an den Einbaustator (11) angestellt und mit Konterschrauben (25) gesichert zu sein um eine Verformung des Gehäuses (12, 13, 14) durch die beim Transport auftretenden Kräfte zu vermeiden, wobei die Konterschraube (25) nach dem Transport entfernbar und die Arretierungsschraube (23) nach dem Transport rückstellbar und sicherbar ist,
wobei die Abstimmschrauben (33, 36) in zweite Gewindehülsen (32, 35) einschraubbar gelagert sind, um durch Verspannen oder Lösen der Abstimmschrauben (33, 36) in einer eingestellten Position Gehäuseschwingungsamplituden im Betrieb der elektrischen Maschine (10) zu minimieren, indem ein Spiel (S) zwischen der zweiten Gewindehülse (27) und dem Einbaustator (11) sicherstellt, dass keine Vibrationen vom Einbaustator (11) auf das Gehäuse (12, 13, 14) übertragen werden.

2. Elektrische Maschine (10) nach Anspruch 1, **dadurch gekennzeichnet, dass** die erste Gewindehülse (27) am Gehäuse (12, 13, 14) befestigt, insbesondere angeschweisst, ist, und die Konterschrauben (25) zum Kontern der Arretierungsschraube (23) in der ersten Gewindehülse (27) vorgesehen sind.

3. Elektrische Maschine (10) nach dem vorstehenden Anspruch, **dadurch gekennzeichnet, dass** die Längen der ersten Gewindehülsen (27) und der Arretierungsschrauben (23) so gewählt sind, dass nach dem Herausschrauben der Arretierungsschrauben (23) ein ausreichendes Spiel (S) zwischen den ersten Gewindehülsen (27) und dem Einbaustator (11) verbleibt, und dass nach dem Anstellen der Arretierungsschrauben (23) an den Einbaustator (11) in die erste Gewindehülse (27) von aussen jeweils die Konterschraube (25) einschraubbar ist.

4. Elektrische Maschine (10) nach dem vorstehenden Anspruch, **dadurch gekennzeichnet, dass** die Arretierungsschrauben (23) und/oder die Konterschrauben (25) zur Betätigung an ihrem äusseren Ende jeweils einen Innensechskant (24, 26) aufweisen.

5. Elektrische Maschine (10) nach Anspruch 1, **dadurch gekennzeichnet, dass** am Gehäuse (12, 13, 14) Anhebevorrichtungen (16) zum Anheben der Maschine (10) angeordnet sind, und dass die Arretierungsvorrichtungen (18) über das Gehäuse (12, 13, 14) derart verteilt angeordnet sind, dass beim Anheben der Maschine (10) an den Anhebevorrichtungen (16) Verformungen des Gehäuses (12, 13, 14) durch die Arretierungsvorrichtungen (18) verhindert werden.

6. Elektrische Maschine (10) nach Anspruch 5, **dadurch gekennzeichnet, dass** das Gehäuse (12, 13, 14) aus einem Gehäuseoberteil (13) und einem Gehäuseunterteil (14) zusammengesetzt ist, welche Teile (13, 14) an einem Trennflansch (15) miteinander lösbar verbunden sind, und dass die Arretierungsvorrichtungen (18) in unmittelbarer Nähe des Trennflansches (15) am Gehäuse (12, 13, 14) befestigt sind.

7. Elektrische Maschine (10) nach Anspruch 1, **dadurch gekennzeichnet, dass** die zweite Gewindehülse (32, 35) am Gehäuse (12, 13, 14) befestigt, insbesondere angeschweisst, ist.

8. Elektrische Maschine (10) nach dem vorstehenden Anspruch, **dadurch gekennzeichnet, dass** die Abstimmschrauben (33, 36) zur Betätigung an ihrem äusseren Ende jeweils einen Innensechskant (34, 37) aufweisen.

9. Elektrische Maschine (10) nach Anspruch 1, **dadurch gekennzeichnet, dass** das Gehäuse (12, 13, 14) aus einem Gehäuseoberteil (13) und einem Gehäuseunterteil (14) zusammengesetzt ist, welche Teile (13, 14) an einem Trennflansch (15) miteinander lösbar verbunden sind, und dass die Abstimmvorrichtungen (38, 39) in der Nähe des Trennflansches (15) am Gehäuseoberteil (13) und/oder am Gehäuseunterteil (14) befestigt sind.

## Claims

1. An electric machine (10), comprising an integrated stator (11) and a housing (12, 13, 14), which housing (12, 13, 14) surrounds the integrated stator (11) with clearance, wherein the integrated stator (11) is mounted in the housing (12, 13, 14) by means of an integrated stator suspension (29); wherein the integrated stator suspension (29) is especially executed in the form of a plurality of support rings, which support rings enclose the integrated stator (11) and are arranged spaced apart from one another in succession in the axial direction; wherein the electric machine (10) comprises fixing devices for fixing the housing (12, 13, 14) relative to the integrated stator (11) or to the integrated stator suspension (29), which fixing devices are designed as adjustment devices (38, 39) and locking devices (18); wherein the adjustment devices (38, 39) are formed from outside the housing (12, 13, 14) for adjustable coupling of the housing (12, 13, 14) to the integrated stator suspension (29), and the locking devices (18) are formed for locking between the housing (12, 13, 14) and the integrated stator (11), and
wherein the adjustment devices (38, 39) each comprise an adjustment screw (33, 36), which adjustment screws (33, 36) are screwed into the housing (12, 13, 14) from the outside when the electric machine (10) is started up, and the inner ends of which can be positioned on the integrated stator suspension (29),
wherein furthermore the locking devices (18) are arranged during transport of the electric machine (10) and each comprise a locking screw (23), which locking screws (23) are screwed into the housing from outside through first threaded sleeves (27) which extend inwards in the radial direction relative to the machine axis; wherein the integrated stator (11) has a plurality of compression beams (17) which run in the axial direction distributed on its outer circumference; and in that the inner ends of the locking screws (23) can be positioned on the compression beams (17); wherein the locking devices (18) are formed for locking between the housing (12, 13, 14) and the integrated stator (11) in that the locking screws (23) are configured and arranged during transport of the electric machine (10) with their inner ends are placed on the integrated stator (11) and secured by counter screws (25) in order to prevent a deformation of the housing (12, 13, 14) due to the forces that occur during transport; wherein the counter screw (25) can be removed after transport and the locking screw (23) can be reset and secured after transport,
wherein the adjustment screws (33, 36) are positioned such that they can be screwed into second threaded sleeves (32, 35) in order to minimize housing oscillation amplitudes during operation of the electric machine (10) in a set position by tightening or loosening the adjustment screws (33, 36), in that a clearance (S) between the second threaded sleeve (27) and the integrated stator (11) ensures that no vibrations are transmitted from the integrated stator (11) to the housing (12, 13, 14).

2. The electric machine (10) according to Claim 1, **characterized in that** the first threaded sleeve (27) is fastened, especially welded, to the housing (12, 13, 14), and the counter screws (25) are provided for countering the locking screw (23) in the first threaded sleeve (27).

3. The electric machine (10) according to the preceding claim, **characterized in that** the lengths of the first threaded sleeves (27) and of the locking screws (23) are selected such that a sufficient clearance (S) remains between the first threaded sleeves (27) and the integrated stator (11) after the locking screws (23) have been unscrewed, and **in that** the respective counter screw (25) can be screwed into the first threaded sleeve (27) from the outside after the locking screws (23) have been positioned on the integrated stator (11).

4. The electric machine (10) according to the preceding claim, **characterized in that** the locking screws (23) and/or the counter screws (25) each have a hexagonal recess (24, 26) at their outer end for operation.

5. The electric machine (10) according to Claim 1, **characterized in that** lifting devices (16) for lifting the machine (10) are arranged on the housing (12, 13, 14), and **in that** the locking devices (18) are distributed across the housing (12, 13, 14) in such a way that deformations of the housing (12, 13, 14) are prevented by the locking devices (18) when the machine (10) is lifted on the lifting devices (16).

6. The electric machine (10) according to Claim 5, **characterized in that** the housing (12, 13, 14) is composed of an upper housing part (13) and a lower housing part (14), which parts (13, 14) are detachably connected to one another at a separating flange (15), and **in that** the locking devices (18) are fastened to the housing (12, 13, 14) in the immediate vicinity of the separating flange (15).

7. The electric machine (10) according to Claim 1, **characterized in that** the second threaded sleeve (32, 35) is fastened, especially welded, to the housing (12, 13, 14).

8. The electric machine (10) according to the preceding claim, **characterized in that** the adjustment screws (33, 36) each have a hexagonal recess (34, 37) at their outer end for operation.

9. The electric machine (10) according to Claim 1, **characterized in that** the housing (12, 13, 14) is composed of an upper housing part (13) and a lower housing part (14), which parts (13, 14) are detachably connected to one another at a separating flange (15), and **in that** the adjusting devices (38, 39) are fastened to the upper housing part (13) and/or to the lower housing part (14) in the vicinity of the separating flange (15).

## Revendications

1. Machine électrique (10), comprenant un stator intégré (11) et un boîtier (12, 13, 14), lequel boîtier (12, 13, 14) entoure le stator intégré (11) à une certaine distance, le stator intégré (11) étant logé au moyen d'une suspension (29) de stator intégré dans le boîtier (12, 13, 14), la suspension (29) de stator intégré étant en particulier conçue sous forme de plusieurs bagues support, lesquelles bagues support entourent le stator intégré (11) et sont disposées les unes derrières les autres à une certaine distance les unes des autres dans la direction axiale, la machine électrique (10) comprenant des dispositifs de fixation pour fixer le boîtier (12, 13, 14) par rapport au stator intégré (11) ou par rapport à la suspension (29) de stator intégré, lesquels dispositifs de fixation sont conçus en tant que dispositifs de réglage (38, 39) et dispositifs de blocage (18), les dispositifs de réglage (38, 39) étant conçus pour l'accouplement réglable du boîtier (12, 13, 14) à la suspension (29) du stator intégré à partir de l'extérieur du boîtier (12, 13, 14) et les dispositifs de blocage (18) étant conçus pour le blocage entre le boîtier (12, 13, 14) et le stator intégré (11) et
les dispositifs de réglage (38, 39) comprenant à chaque fois une vis de réglage (33, 36), lesquelles vis de réglage (33, 36) sont vissées, lors de la mise en service de la machine électrique (10), à partir de l'extérieur dans le boîtier (12, 13, 14) et sont réglables avec leur extrémité interne contre la suspension (29) du stator intégré,
les dispositifs de blocage (18) étant en outre mis en place pendant le transport de la machine électrique (10) et comprenant à chaque fois une vis de blocage (23), lesquelles vis de blocage (23) sont vissées dans le boîtier à partir de l'extérieur à travers des premières douilles taraudées (27), qui s'étendent vers l'intérieur dans la direction radiale par rapport à l'axe de la machine, le stator intégré (11) présentant sur sa périphérie externe, de manière répartie, une multitude de barres d'appui (17) s'étendant dans la direction axiale et les vis de blocage (23) pouvant être réglées à l'aide de l'extrémité interne contre les barres d'appui (17), les dispositifs de blocage (18) étant conçus pour le blocage entre le boîtier (12, 13, 14) et le stator intégré (11) en ce que les vis de blocage (23) sont configurées et disposées pour éviter, lors du transport de la machine électrique (10), l'extrémité interne étant placée contre le stator intégré (11) et bloquée à l'aide de contre-vis (25), une déformation du boîtier (12, 13, 14) par les forces qui surviennent lors du transport, les contre-vis (25) pouvant être enlevées après le transport et la vis de blocage (23) pouvant être repositionnée et bloquée après le transport,
les vis de réglage (33, 36) étant logées de manière à pouvoir être vissées dans des deuxièmes douilles taraudées (32, 35) pour réduire au minimum, par serrage ou desserrage des vis de réglage (33, 36) dans une position réglée, les amplitudes d'oscillation du boîtier lors du fonctionnement de la machine électrique (10) en ce qu'un jeu (S) entre la deuxième douille taraudée (27) et le stator intégré (11) assure qu'aucune vibration ne soit transmise par le stator intégré (11) au boîtier (12, 13, 14).

2. Machine électrique (10) selon la revendication 1, **caractérisée en ce que** la première douille taraudée (27) est fixée, en particulier soudée, sur le boîtier (12, 13, 14) et les contre-vis (25) sont destinées à contrer la vis de blocage (23) dans la première douille taraudée (27).

3. Machine électrique (10) selon la revendication précédente, **caractérisée en ce que** les longueurs des premières douilles taraudées (27) et des vis de blocage (23) sont choisies de manière telle qu'après le dévissage des vis de blocage (23), il reste un jeu (S) suffisant entre les premières douilles taraudées (27) et le stator intégré (11) **et en ce que**, après le réglage des vis de blocage (23) contre le stator intégré (11), la contre-vis (25) peut à chaque fois être vissée depuis l'extérieur dans la première douille taraudée (27).

4. Machine électrique (10) selon la revendication précédente, **caractérisée en ce que** les vis de blocage (23) et/ou les contre-vis (25) présentent à chaque fois une tête à six pans creux (24, 26) en leur extrémité externe pour l'actionnement.

5. Machine électrique (10) selon la revendication 1, **caractérisée en ce que** des dispositifs de levage (16) pour soulever la machine (10) sont disposés sur le boîtier **et en ce que** les dispositifs de blocage (18) sont disposés de manière répartie sur le boîtier (12, 13, 14) de manière telle que lors du levage de la machine (10) au niveau des dispositifs de levage (16), des déformations du boîtier (12, 13, 14) sont empêchées par les dispositifs de blocage (18).

6. Machine électrique (10) selon la revendication 5, **caractérisée en ce que** le boîtier (12, 13, 14) est constitué d'une partie supérieure de boîtier (13) et d'une partie inférieure de boîtier (14), lesquelles parties (13, 14) sont reliées l'une à l'autre de manière amovible au niveau d'une bride de séparation (15) **et en ce que** les dispositifs de blocage (18) sont fixés dans la proximité immédiate de la bride de séparation (15) sur le boîtier (12, 13, 14).

7. Machine électrique (10) selon la revendication 1, **caractérisée en ce que** la deuxième douille taraudée (32, 35) est fixée, en particulier soudée, sur le boîtier (12, 13, 14).

8. Machine électrique (10) selon la revendication précédente, **caractérisée en ce que** les vis de réglage (33) présentent à chaque fois une tête à six pans creux (34, 37) en leur extrémité externe pour l'actionnement.

9. Machine électrique (10) selon la revendication 1, **caractérisée en ce que** le boîtier (12, 13, 14) est constitué d'une partie supérieure de boîtier (13) et d'une partie inférieure de boîtier (14), lesquelles parties (13, 14) sont reliées l'une à l'autre de manière amovible au niveau d'une bride de séparation (15) **et en ce que** les dispositifs de réglage (38) sont fixés dans la proximité de la bride de séparation (15) sur la partie supérieure de boîtier (13) et/ou sur la partie inférieure de boîtier (14).
